Europäisches Patentamt

**European Patent Office**

**Office européen des brevets**

(11) Veröffentlichungsnummer: **0 173 938**

**A1**

(12) **EUROPÄISCHE PATENTANMELDUNG**

(21) Anmeldenummer: **85110686.4**

(22) Anmeldetag: **26.08.85**

(51) Int. Cl.⁴: **B 29 C 47/02**
**//B29K105:08, B29L23:22**

(30) Priorität: **07.09.84 DE 3432857**

(43) Veröffentlichungstag der Anmeldung:
**12.03.86 Patentblatt 86/11**

(84) Benannte Vertragsstaaten:
**DE FR GB SE**

(71) Anmelder: **BAYER AG**
**Konzernverwaltung RP Patentabteilung**
**D-5090 Leverkusen 1 Bayerwerk(DE)**

(72) Erfinder: **Schreiner, Wilhelm**
**Dönhoffstrasse 45**
**D-5090 Leverkusen 1(DE)**

(72) Erfinder: **Vogl, Herbert, Dipl.-Ing.**
**Cuxhavener Strasse 27**
**D-5000 Köln 60(DE)**

(54) **Verfahren und Vorrichtung zum kontinuierlichen beidseitigen Beschichten von gewirkten oder gewebten Schläuchen.**

(57) Gewirkte oder gewebte Schläuche (1) lassen sich beidseitig kontinuierlich beschichten, indem der Schlauch (1) durch ein Führungsgehäuse (2) mit fliegend gelagertem Dorn (4) geführt und dabei über einen Ringkanal (10) die Beschichtungsmasse zunächst von außen durch den Schlauch hindurchgepreßt wird und zunächst die Innenbeschichtung (17) bildet und dann mittels eines zweiten Ringkanals weitere, gegebenenfalls unterschiedliche Beschichtungsmasse zugeführt wird, welche in einem zweiten Beschichtungsspalt (22) die Außenschicht (23) ausbildet.

BAYER AKTIENGESELLSCHAFT     5090 Leverkusen, Bayerwerk

Konzernverwaltung RP     Mr/by-c
Patentabteilung


Verfahren und Vorrichtung zum kontinuierlichen beidseitigen Beschichten von gewirkten oder gewebten Schläuchen

Die Erfindung richtet sich auf ein Verfahren und eine Vorrichtung zum kontinuierlichen beidseitigen Beschichten von gewirkten oder gewebten Schläuchen, wobei der Schlauch an einem äußeren Ringkanal vorbeigezogen wird, während er in geöffnetem Zustand gehalten wird.

Bisher mußte die innere und äußere Beschichtung von Schläuchen in mehreren Arbeitsgängen durchgeführt werden. Man extrudierte zunächst einen Innenliner und präparierte ihn mit einem Reaktionskleber, zog ihn in den gewebten oder gewirkten Schlauch ein, führte eine Heißversiegelung mit Dampf in einem Heizkanal durch, kühlte anschließend mit Luft, wendete den Schlauch, nadelte ihn und wiederholte das Verfahren für die andere Schlauchoberfläche.

Der manuelle Arbeitsanteil an dieser Fertigungsweise ist erheblich. Die Produktion erfolgt diskontinuierlich und ist je nach Schlauchdurchmesser auf Längen von 30 bis 60 m begrenzt; zwischen Gewebe bzw. Gewirke und

Le A 23 130-Ausland

der Beschichtung besteht nur Punkthaftung; außerdem ist die Gefahr durch Ablösung von Teilen der Beschichtung infolge Wärmeeinflusses gegeben.

Es besteht die Aufgabe, eine Möglichkeit zu schaffen, gewirkte oder gewebte Schläuche mit einer geeigneten Beschichtungsmasse innen und außen kontinuierlich in praktisch unbegrenzten Schlauchlängen zu beschichten und dabei eine gute Haftung der Beschichtung auf dem Schlauch zu gewährleisten.

Diese Aufgabe wird gemäß dem neuen Verfahren dadurch gelöst, daß der Strom der Beschichtungsmasse aus dem größeren Ringkanal durch den Schlauch hindurch in einen inneren Ringkanal gepreßt wird und sich in Abzugsrichtung des Schlauches keilförmig verjüngend von innen schichtbildend an den Schlauch gepreßt wird und anschließend der Strom weiterer zugeführter Beschichtungsmasse in einem zweiten äußeren Ringkanal sich in Abzugsrichtung des Schlauches verjüngend von außen schichtbildend an den Schlauch angepreßt wird.

Das besondere dieses Verfahrens besteht darin, daß das Gewebe oder Gewirke zunächst von der Beschichtungsmasse durchdrungen und dabei durchtränkt wird und erst anschließend die beiden Schlauchoberflächen beschichtet werden. Auf diese Weise werden zuerst durch die Maschen des Gewebes oder Gewirkes hindurch Verbindungsbrücken aus Beschichtungsmasse für die beiden Beschichtungen gebildet. Somit ist das Verfahren auch für Beschichtungsmassen geeignet, welche zu dem Schlauchmaterial keine gute Haftfähigkeit zeigen.

Le A 23 130

Vorzugsweise wird beiden Ringkanälen die gleich Beschichtungsmasse zugeführt.

Alternativ hierzu wird beiden Ringkanälen unterschiedliche Beschichtungsmasse zugeführt.

Die zweite Verfahrensvariante gibt die Möglichkeit, verschiedene oder verschieden eingefärbte Beschichtungsmassen für die Außen- und Innenbeschichtung zu verwenden.

Die gewirkten, gewebten oder auch gestrickten Schläuche können aus Natur-, vorzugsweise jedoch aus Kunstfaserfäden oder Metalldraht hergestellt sein.

Als Beschichtungsmaterialien eignen sich alle thermoplastischen Werkstoffe, insbesondere thermoplastische Elastomere. Als Beispiele seien hier genannt: Styrolbutadien-Pfropfcopolymere (z. B. Cariflex® der Shell AG); Poly(olefin)-Elastomere (z. B. TPR® der Uniroyal, Vistaflex® der Exxon, Vestopren® der Chemische Werke Hüls AG, Levaflex® der Bayer AG); Polyetherester-Elastomere (wie Hytrel® von DuPont, Pelprene® von Toyobo); Polyamid-Elastomere (wie Vestamid® der Chemische Werke Hüls AG, Grilamid® der Emser Werke, Pebax® der ATO Chemie); Ionomere (wie EAA Copolymers der DOW, Thionic® der Exxon) und bevorzugt thermoplastische Polyurethan-Elastomere (wie Desmopan® der Bayer AG). Auch andere Polymerisate mit teils elastomeren Eigenschaften sind denkbar, wie z. B. Weich-PVC usw.

Außerdem sind als polymere Werkstoffe Gieß-Elastomere, so z. B. Polyurethan-Ionomere oder Polyurethan-Gieß-Elastomere aus den bekannten Rohstoffen (siehe Becker/Braun, "Kunststoff Handbuch", Band 7, Polyurethane, Carl-Hanser-Verlag, München/Wien 1983) geeignet.

Le A 23 130

Die neue Vorrichtung zum kontinuierlichen beidseitigen Beschichten von gewirkten oder gewebten Schläuchen geht aus von einer Schlauchtransporteinrichtung und einem mit einer auf den Außendurchmesser des Schlauches abgestimmten Bohrung eines Führungsgehäuses.

Das Neue ist gekennzeichnet durch einen fliegend gelagerten, in die Bohrung hineinragenden, auf den Innendurchmesser des Schlauches abgestimmten Dorn, wobei nahe der Eingangsseite des Führungsgehäuses in dessen Bohrung ein an eine Zuführleitung angeschlossener Ringkanal angeordnet ist und in gleicher Höhe dieses äußeren Ringkanals auch im Dorn ein innerer Ringkanal vorgesehen ist, welcher sich in Abzugsrichtung des Schlauches zu einem schichtbildenden Ringspalt verjüngt; und daß anschließend ein zweiter mit einer Zuleitung verbundener Ringkanal in die Bohrung des Führungsgehäuses weist, welcher sich in Abzugsrichtung des Schlauches zu einem schichtbildenden Ringspalt verjüngt.

Diese Ausführungsform der Vorrichtung erlaubt es, Beschichtungen gleichmäßiger Stärke herzustellen, denn der Dorn spreizt den Schlauch und zentriert sich dabei im Führungsgehäuse selbst oder wird durch zusätzliche Zentriereinrichtungen, welche dem Führungsgehäuse vor- oder nachgeordnet sind, zentriert.

Gemäß einer Ausführungsform sind die beiden Ringkanäle an eine gemeinsame Zuleitung angeschlossen.

Dabei führt vorzugsweise die Zuleitung zu einem der Ringkanäle und die Zuleitung des anderen Ringkanals besteht in einem beide Ringkanäle verbindenden Überströmkanal.

Gemäß einer zweiten Ausführungsform ist jedem Ringkanal eine eigene Zuleitung zugeordnet.

Le A 23 130

Im zweiten Fall besteht die Möglichkeit, verschiedene Beschichtungsmassen zuzuführen.

Gemäß einer weiteren Ausführungsform ist dem ersten äußeren Ringkanal ein Abstreifring nachgeordnet.

Dieser Abstreifring ist nur dann wichtig, wenn verschiedenartige oder verschiedenfarbige Beschichtungsmassen zugeführt werden. Er schabt die von innen durch die Schlauchwandung hindurchgedrückte Beschichtungsmasse ab, so daß sie praktisch nur im Bereich der Maschen mit der anschließend aufzutragenden äußeren Beschichtung in Berührung kommt. Auf diese Weise wird ein Vermischen mit sichtbarer Schlierenbildung vermieden.

Es versteht sich, daß der fertig beschichtete Schlauch nach dem Austritt aus der Beschichtungsvorrichtung beispielsweise mittels eines Luftstromes gekühlt und anschließend aufgerollt werden kann.

Was die Schichtdicken betrifft, so kann man sie durch konstruktive Maßnahmen am Führungsgehäuse und am Dorn festlegen. Dabei ist auch die Wandstärke des unbeschichteten Schlauches zu berücksichtigen. Hinter der ersten Beschichtungsstelle ist der Durchmesser des Dornes um die doppelte Schichtstärke der gewünschten Stärke der Innenbeschichtung zu reduzieren. Hinter der zweiten Beschichtungsstelle ist entsprechend der gewünschten Stärke der Außenbeschichtung die Bohrung des Führungsgehäuses um die doppelte Stärke der Außenbeschichtung zu erweitern. Sind Beschichtungsmassen beim Erkalten einer Schwindung unterworfen, so wäre diese vorher zu berücksichtigen, falls sie ins Gewicht fällt.

Vorzugsweise verjüngen sich die beiden schichtbildenden Ringkanäle zu ihrem zugeordneten Beschichtungsspalt hin.

Le A 23 130

Durch diese Maßnahme wird ein besonders gleichmäßiger Auftrag der Beschichtungsmasse erzielt.

In der Zeichnung ist die neue Vorrichtung in einem Ausführungsbeispiel rein schematisch dargestellt und nachstehend näher erläutert. Es zeigen:

Figur 1 die neue Vorrichtung im Schnitt und
Figur 2 einen Schnitt durch die Wandung des beschichteten Schlauches in vergrößerter Darstellung.

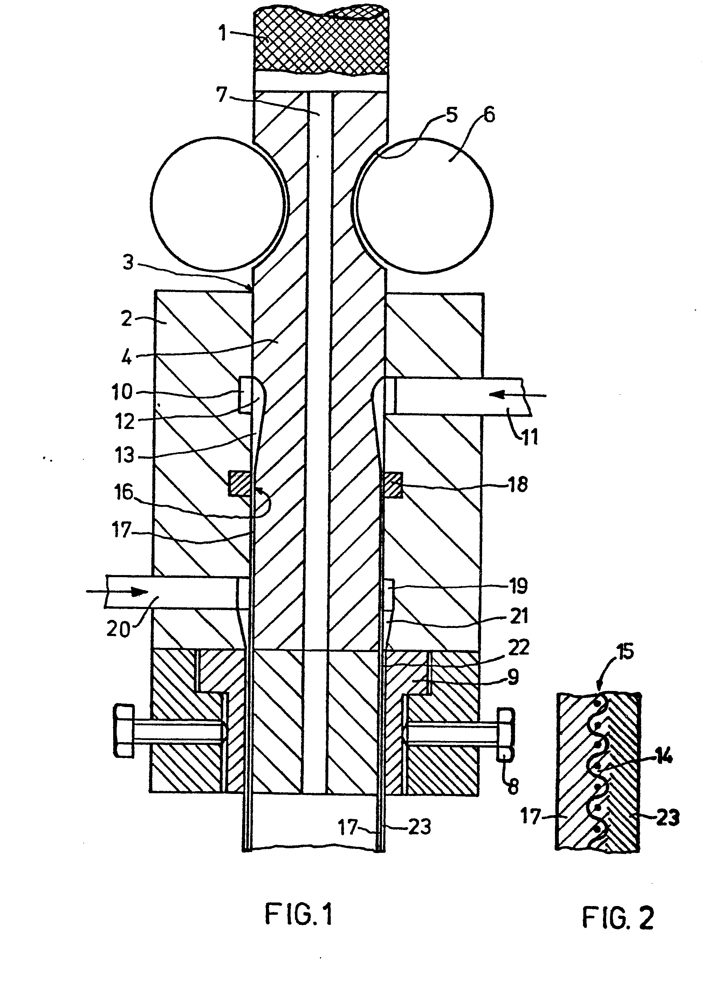

In Fig. 1 besteht die Vorrichtung aus einer nicht dargestellten Abwickelstation, von der ein gewebter Schlauch 1 mittels einer nicht dargestellten Transportvorrichtung, welche eine Aufwickelstation mit Wickelantrieb umfaßt, transportiert wird, wobei zwischen Abwickelstation und Aufwickelstation die eigentliche Beschichtungsvorrichtung angeordnet ist. Sie besteht aus einem Führungsgehäuse 2 mit einer Bohrung 3, in welcher ein Dorn 4 angeordnet ist. Der Dorn 4 ist außerhalb des Führungsgehäuses 2 mittels in Ausnehmungen 5 eingreifende Halterrollen 6 fliegend gelagert. Zur Belüftung des Schlauchinneren weist der Dorn 4 einen Luftkanal 7 auf. Am Ausgang des Führungsgehäuses 2 ist dem Dorn ein mittels Zentrierschrauben 8 einjustierbares Zentrierstück 9 zugeordnet. Der Schlauch 1 ist zwischen Führungsgehäuse 2 und Dorn 4 geführt. Am Eingangsende des Führungsgehäuses 2 ist ein Ringkanal 10 vorgesehen, welcher den Dorn 4 bzw. den Schlauch 1 von außen umgibt. Er steht mit einer Zuleitung 11 in Verbindung. In Höhe des Ringkanals 10 ist im Dorn 4 ebenfalls

Le A 23 130

ein Ringkanal 12 vorgesehen, welcher in Abzugrichtung des Schlauches 1 eine keilförmige Verjüngung 13 aufweist. Auf diese Weise wird der Strom der zugeführten Beschichtungsmasse durch die Maschen 14 des Gewebes 15 gezwungen, durchtränkt dieses dabei und gelangt über den inneren Ringkanal 12 gegen die Innenseite des Schlauches 1 und bildet in dem anschließenden, zwischen Schlauch 1 und Dorn 4 vorgesehen Ringspalt 16 die Innenschicht 17, welche durch die Maschen 14 nach außen durchgreift. Ein im Führungsgehäuse 2 angeordneter Abstreifring 18 sorgt aber dafür, daß außen noch keine Beschichtung stattfindet. Weiter in Abzugrichtung des Schlauches 1 ist ein zweiter äußerer Ringkanal 19 mit einer gesonderten Zuleitung 20 vorgesehen. Er besitzt in Abzugsrichtung ebenfalls eine keilförmige Verjüngung 21 und mündet in einen äußeren Ringspalt 22, in welchem die Außenschicht 23 gebildet wird.

Diese Vorrichtung eignet sich insbesondere für unterschiedliche Innen- und Außenbeschichtung. Wird die gleiche Beschichtungsmasse für die Innen- und Außenbeschichtung verwendet, so erübrigt sich gegebenenfalls der Abstreifring 18 und die beiden an die Zuleitungen angeschlossenen Ringkanäle 10, 20 sind an eine gemeinsame, sich verzweigende Zuleitung angeschlossen oder die Zuleitung führt zu einem der beiden Ringkanäle, welcher mit dem anderen über Überströmkanäle verbunden ist.

Le A 23 130

## Verfahrensbeispiel

Ein gewebter Schlauch mit einem Außendurchmesser von 55 mm und einer mittleren Wandstärke von 1,5 mm wird mit einer Geschwindigkeit von 3 m/min durch das Führungsgehäuse 2 gezogen. Eingangsseitig ist die Bohrung 3 des Führungsgehäuses 2 und der Durchmesser des Dornes 4 so bemessen, daß der hindurchgeführte Schlauch 1 wenig Spiel hat. Über die Zuleitung 11 wird dem Ringkanal 10 ein geschmolzenes thermoplastisches Polyurethan in der Menge von 0,6 kg/min und einem Druck von 250 bar zugeführt. Es wird dabei durch die Maschen 14 des Gewebes 15 gepreßt und gelangt in den inneren Ringkanal 12, wo es durch die Verjüngung erneut von innen gegen und in das Gewebe 15 des Schlauches gepreßt wird. Es bildet sich dabei in dem inneren Ringspalt 16 die Innenschicht 17 auf der Innenfläche des Schlauches 1. Dieser Ringspalt 16 hat eine Stärke von 0,5 mm, so daß die Innenbeschichtung eine dementsprechende Stärke aufweist. Beim weiteren Transport gelangt der Schlauch 1 in den Bereich des äußeren Ringkanals 19, dem über eine Zuleitung 20 eine anders eingefärbte Beschichtungsmasse ansonsten gleicher Konsistenz zugeführt wird. Da die Außenbeschichtung stärker sein soll, ist die Zufuhr größer, und zwar 0,7 kg/min. Der Arbeitsdruck ist jedoch der gleiche, wie beim ersten Beschichtungsvorgang. Die Beschichtungsmasse wird insbesondere in der keilförmigen Verjüngung 21 gegen die Außenfläche des Schlauches 1 gepreßt und bildet in dem Ringspalt 22 von 0,75 mm Stärke eine dementsprechend starke Außenschicht 23.

Die Länge des Führungsgehäuses bzw. des Zentrierstückes 9 ist so auf die Transportgeschwindigkeit abgestimmt, daß die als Schmelze zugeführte Beschichtungsmasse beim Austritt des fertig beschichteten Schlauches ins Freie schon soweit abgekühlt ist, daß die Beschichtung ihre Form beibehält. Erforderlichenfalls ist bereits innerhalb des Führungsgehäuses 2 bzw. Zentrierstückes 9 ein Kühlsystem vorgesehen. Der eigentliche Kühlvorgang auf unschädliche Resttemperaturen geschieht anschließend im Freien durch Kühlung mittels eines Luftstromes. Durch Zufuhr von 0,075 m³ Luft/min wird der fertige Schlauch 1 auf Raumtemperatur abgekühlt. Die Luftkühlung kann gegebenenfalls durch eine Wasserkühlung ergänzt bzw. ersetzt werden.

Le A 23 130

Patentansprüche

1.     Verfahren zum kontinuierlichen Beschichten von gewirkten oder gewebten Schläuchen, wobei der Schlauch an einem äußeren Ringkanal vorbeigezogen wird, während er in geöffnetem Zustand gehalten wird, dadurch gekennzeichnet, daß der Strom der Beschichtungsmasse aus dem äußeren Ringkanal durch den Schlauch hindurch in einen inneren Ringkanal gepreßt wird und sich in Abzugsrichtung des Schlauches keilförmig verjüngend von innen schichtbildend an den Schlauch gepreßt wird und anschließend der Strom weiterer zugeführter Beschichtungsmasse in einem zweiten äußeren Ringkanal sich in Abzugsrichtung des Schlauches verjüngend von außen schichtbildend an den Schlauch angepreßt wird.

2.     Verfahren nach Anspruch 1, dadurch gekennzeichnet, daß beiden Ringkanälen die gleiche Beschichtungsmasse zugeführt wird.

3.     Verfahren nach Anspruch 1, dadurch gekennzeichnet, daß den Ringkanälen verschiedene Beschichtungsmassen zugeführt werden.

4.     Verfahren nach einem der Ansprüche 1 bis 3, dadurch gekennzeichnet, daß als Polymere Polyurethan-Gieß-Elastomere oder thermoplastische Elastomere, bevorzugt thermoplastische Polyurethane, verwendet werden.

5.     Vorrichtung zum kontinuierlichen beidseitigen Beschichten von gewirkten oder gewebten Schläuchen (1), bestehend aus einer Schlauchtransporteinrichtung und aus einem mit einer auf den Außendurchmesser des Schlauches (1) abgestimmten Bohrung (3) eines Führungsgehäuses (2), gekennzeichnet durch einen fliegend gelagerten, in die

Le A 23 130

Bohrung (3) hineinragenden, auf den Innendurchmesser des Schlauches (1) abgestimmten Dorn (4), wobei nahe der Eingangsseite des Führungsgehäuses (2) in dessen Bohrung (3) ein an eine Zuführleitung (11) angeschlossener Ringkanal (10) angeordnet ist, und in gleicher Höhe dieses äußeren Ringkanales (10) auch im Dorn (4) ein innerer Ringkanal (12) vorgesehen ist, welcher sich in Abzugsrichtung des Schlauches (1) zu einem schichtbildenden Ringspalt (16) verjüngt; und daß anschließend ein zweiter, mit einer Zuleitung (20) verbundener Ringkanal (19) in der Bohrung (3) des Führungsgehäuses (2) angeordnet ist, welcher sich in Abzugsrichtung des Schlauches (1) zu einem schichtbildenden Ringspalt (22) verjüngt.

6.      Vorrichtung nach Anspruch 5, gekennzeichnet durch eine Zentriereinrichtung (8, 9) für den Dorn (4).

7.      Vorrichtung nach Anspruch 5 oder 6, dadurch gekennzeichnet, daß die Ringkanäle (10, 19) an eine gemeinsame Zuleitung angeschlossen sind.

8.      Vorrichtung nach Anspruch 7, dadurch gekennzeichnet, daß die Zuleitung (11) zu einem der Ringkanäle (10) führt und die Zuleitung des anderen Ringkanals (19) in einem beide Ringkanäle (10, 19) verbindenden Überströmkanal besteht.

9.      Vorrichtung nach Ansprüchen 5 und 6, dadurch gekennzeichnet, daß jedem Ringkanal (10, 19) eine eigene Zuleitung (11, 20) zugeordnet ist.

10.      Vorrichtung nach einem der Ansprüche 5 bis 9, gekennzeichnet durch einen dem ersten äußeren Ringkanal (10) nachgeordneten Abstreifring (18).

Le A 23 130

FIG.1

FIG. 2

Le A 23130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X,Y | GB-A-2 072 084 (RAMON RIBO CASALS) <br> * Abbildungen 1,2,10 * | 1-6,9 | B 29 C 47/02 // <br> (B 29 K 105/08 <br> B 29 L 23:22 ) |
| Y | DE-A-2 137 059 (TANAKA) <br> * Abbildungen 1-3 * | 1-6,9 | |
| A | US-A-2 990 577 (DE LAUBAREDE) <br> * Abbildung 2 * | 1,5,6 | |
| A | US-A-4 125 585 (ROSENBAUM) <br> * Abbildung 3 * | 7 | |
| | | | **RECHERCHIERTE SACHGEBIETE (Int. Cl.4)** |
| | | | B 29 C 47/00 |

Der vorliegende Recherchenbericht wurde für alle Patentansprüche erstellt.

| Recherchenort | Abschlußdatum der Recherche | Prüfer |
|---|---|---|
| DEN HAAG | 31-10-1985 | KUSARDY R. |